Europäisches Patentamt

European Patent Office

Office européen des brevets

(11) Veröffentlichungsnummer: **0 215 520 B1**

(12) **EUROPÄISCHE PATENTSCHRIFT**

(45) Veröffentlichungstag der Patentschrift: **04.05.94**

(21) Anmeldenummer: **86201541.9**

(22) Anmeldetag: **09.09.86**

(51) Int. Cl.⁵: **G02B 6/26**, G02B 6/44

(54) Verfahren zur Herstellung einer Verbindung zwischen zwei optischen Leitungen und Anordnung zur Ausübung des Verfahrens.

(30) Priorität: **11.09.85 DE 3532312**

(43) Veröffentlichungstag der Anmeldung:
**25.03.87 Patentblatt 87/13**

(45) Bekanntmachung des Hinweises auf die Patenterteilung:
**04.05.94 Patentblatt 94/18**

(84) Benannte Vertragsstaaten:
**DE FR GB**

(56) Entgegenhaltungen:
**EP-A- 116 480**     **DE-A- 2 544 828**
**DE-A- 2 607 950**    **DE-A- 2 721 300**
**FR-A- 2 559 916**    **FR-A- 2 566 756**

**PATENT ABSTRACTS OF JAPAN, Band 10, Nr. 15 (P-422)[2072], 21. Januar 1986 ; & JP-A-60 169 811 (FURUKAWA DENKI KOGYO K.K.) 03-09-1985**

**PATENT ABSTRACTS OF JAPAN, Band 10, Nr. 15 (P-422)[2072], 21. Januar 1986 ; & JP-A-60 169 810 (FURUKAWA DENKI KOGYO K.K.) 03-09-1985**

(73) Patentinhaber: **Philips Patentverwaltung**

**GmbH**
**Wendenstrasse 35c**
**D-20097 Hamburg(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB**

(72) Erfinder: **Becker, Johann, Dr.**
**Zöllnerstrasse 64**
**D-5063 Overath(DE)**
Erfinder: **Zell, Werner, Dr.**
**Gleiwitzerstrasse 15**
**D-5000 Köln 80(DE)**

(74) Vertreter: **Koch, Ingo, Dr.-Ing. et al**
**Philips Patentverwaltung GmbH,**
**Wendenstrasse 35c**
**D-20097 Hamburg (DE)**

## Beschreibung

Die Erfindung bezieht sich auf ein Verfahren zur Herstellung einer Verbindung zwischen zwei optischen Leitungen, bei welchem aus einem Vorratsbehälter eine Reservelänge eines Lichtwellenleiters ausgezogen und nach Fertigstellung der Verbindung wieder hineingeschoben wird sowie auf eine Anordnung zur Ausübung dieses Verfahrens.

Bei einem nach der DE-OS 31 18 173 bekannten derartigen Verfahren sind die einzelnen Lichtwellenleiter eines jeden Kabelendes je für sich in Vorratsbehältern untergebracht, aus denen zur direkten Verbindung je zweier Enden von Lichtwellenleitern Reservelängen herausgezogen und nach Herstellung von Spleißverbindungen wieder hineingeschoben werden. Dabei ist eine erhebliche Anzahl von Vorratsbehältern erforderlich, welche doppelt so groß wie die Anzahl der Lichtwellenleitern der optischen Kabel ist. Diese Anzahl an Vorratsbehältern ist auch dann vorzusehen, wenn zunächst nur ein Teil der Lichtwellenleiter miteinander verspleißt werden soll.

Ein Ringelement einer Kassette für Lichtleitfasern ist aus DE-A 2 721 300 bekannt. Ein Verfahren zur Herstellung einer Verbindung zweier optischer Leitungen mittels einer separaten Rangierleitung ist aus EP-A 0 116 480 bekannt.

Darüber hinaus besteht insbesondere bei Hauptverteilern das Problem, daß Lichtwellenleiter mehrerer einlaufender optischer Kabel wahlweise miteinander verbindbar sein müssen. In jedem der Vorratsbehälter müssen Reservelängen für die maximal zu überbrückende Entfernung vorgesehen sei. Die dementsprechend großen Abmessungen der Vorratsbehälter und deren große Anzahl bedingen, daß sehr viel Platz in einem Verteilergehäuse vorgesehen sein muß.

Der Erfindung liegt die Aufgabe zugrunde, das Verfahren der eingangs genannten Art derart zu gestalten, daß der Raumbedarf der Vorratsbehäler verringert wird.

Die Lösung gelingt durch die im Anspruch 1 genannten Merkmale; dabei werden die zu verbindenden Lichtwellenleiter der optischen Leitungen mit je einem Ende einer Rangierleitung verbunden, die jeweils aus einem einzigen Vorratsbehälter ausgezogen und deren Überlängen nach Herstellung der Verbindungen in den Vorratsbehälter zurückgeschoben werden.

Bei dem erfindungsgemäßen Verfahren werden nur soviel Vorratsbehälter benötigt, wie Verbindungen tatsächlich hergestellt werden müssen. Selbst bei Durchführung sämtlicher möglichen Verbindungen ist die maximale Anzahl nur halb so groß wie im bekannten Fall. Darüberhinaus brauchen nicht sämtliche Vorratsbehälter für die maximal erforderlichen Reservelängen dimensioniert zu sein. Falls nur geringe Entfernungen überbrückt werden sollen, können Vorratsbehälter mit verkleinerten Abmessungen verwendet werden.

Ein für das erfindungsgemäße Verfahren besonders geeigneter Vorratsbehälter flacher Bauart ergibt sich dadurch, daß er einen mittig zwischen zwei seitlichen Führungsflächen angeordneten, im wesentlichen zylindrischen Kern mit einem Durchmesser von mindestens 40 mm aufweist, daß der Abstand h zwischen den Führungsflächen im Bereich d < h < 1,3 d liegt, wenn d der Durchmesser der Rangierleitung ist, daß die Rangierleitung mindestens mit zwei Windungen spiralig in einer Ebene um den Kern gewunden ist, daß das Ende der äußersten Windung durch eine Öffnung einer den Kern mit Abstand umgebenen Mantelfläche geführt ist und daß das Ende der innersten Windung aus dem Windungsraum zwischen den seitlichen Führungsflächen schräg und über die restlichen Windungen zu einer radial außerhalb des Windungsraums angeordneten Führungsöse geleitet ist. Dabei ist es vorteilhaft, daß das Ende der innersten Windung auf dem Weg bis zur zumindest annähernden Anlage an der Außenfläche des Kerns in einem Bereich außerhalb des Windungsraums in einem Führungskanal geführt ist.

Eine bevorzugte Ausführungsform ist dadurch gekennzeichnet, daß der Führungskanal auf einem vorbestimmten Winkelbereich im wesentlichen konzentrisch zum Kern und gegebenfalls in dessen Außenbereich schräg verläuft, während der Führungskanal über die Windungen außerhalb des Windungsraums in einer Parallelebene vorzugsweise innerhalb einer Führungswandung geführt ist.

Ein leichtes Einlegen der Windungen wird dadurch ermöglichst, daß zumindest eine der seitlichen Führungswandungen aus mindestens 3 tangential beabstandeten radialen speichenförmigen Stegen besteht, die im mittleren Bereich durch schräg zur Tangente der Windungen verlaufende Einführungsschlitze getrennt sind.

Ein leichtgängiges Hineinschieben und Herausziehen der Enden der Ragierleitung ist dadurch möglich, daß beide Enden gleichzeitig und gleichmäßig ausgezogen bzw. zurückgeschoben werden.

Wenn die verfügbare Länge eines Endes nicht ausreicht, während für das andere Ende zuviel Länge zur Verfügung steht, kann man vorteilhaft ein Ende herausziehen und gleichzeitig oder wechselnd in kurzen Längenabschnitten das andere Ende in den Vorratsbehälter hineinschieben.

Eine gute Ausnutzung des Speicherraums eines Vorratsbehälters wird dadurch erzielt, daß die Anzahl n der Windungen

$$n = k \cdot \frac{D - d}{d_0}$$

beträgt. Dabei ist D der Durchmesser der äußersten Windung, d der Durchmesser des Kerns und $d_o$ der Durchmesser der Rangierleitung. Der dimensionslose Wert k sollte im Bereich 0,2 < K < 0,3 gewählt werden. Optimal ist ein Wert von k = 0,25.

Die Erfindung wird anhand der Beschreibung von in der Zeichnung dargestellten vorteilhaften Ausführungsbeispielen erläutert.

Figur 1     zeigt im prinzipieller Darstellung eine nach dem erfindungsgemäßen Verfahren hergestellte Verbindung zweier Lichtwellenleiter

Figur 2     zeigt schematisch verschiedenartige erfindungsgemäß hergestellte Verbindungen in einer Verteilerstation

Figur 3     zeigt die Aufsicht auf eine erste Ausführungsart eines für die Erfindung geeigneten Vorratsbehälters

Figur 4     zeigt einen Schnitt durch die Anordnung nach Figur 3 entsprechend der Linie A-B

Figur 5     zeigt die Aufsicht auf eine zweite Ausführungform eines für die Erfindung besonders geeigneten Vorratsbehälters

Figur 6     zeigt einen Schnitt durch die Anordnung nach Figur 5 entsprechend der Linie C-D.

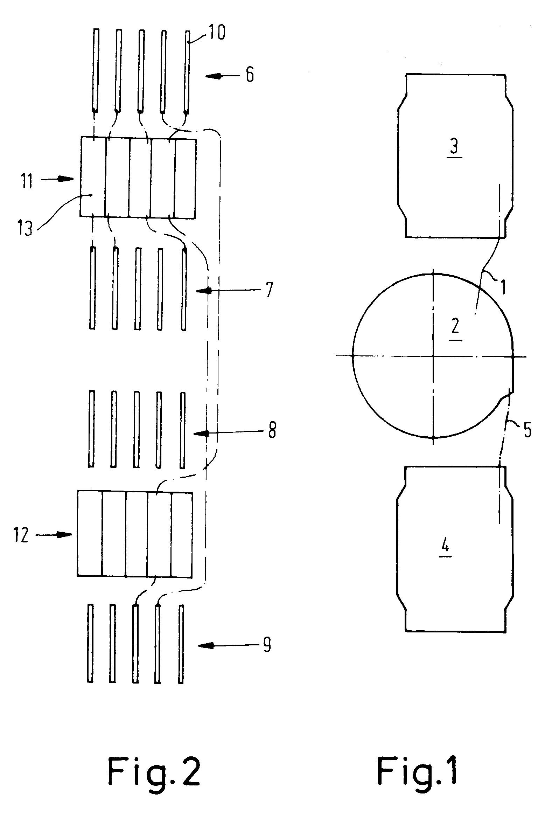

In Figur 1 ist mit 2 der Aufnahmebehälter für eine Rangierleitung mit den Enden 1 und 5 bezeichnet. Als Rangierleitungen, die nur eine Lichtleitfaser enthalten, sind Fasern mit festem Sekundärcoating besonders geeignet, die einen Außendurchmesser von etwa 0,9 mm besitzen. Die Gehäuse 3 und 4 dienen zur Aufnahme von Spleißverbindungen mit je einem Lichtwellenleiter eines ersten Kabels bzw. eines zweiten Kabels. Die Länge der Rangierleitungen ist entsprechend der Entfernungen der Gehäuse 3 und 4 voneinander zu wählen. Für die Mehrzahl der in der Praxis vorkommenden Fälle ist es ausreichend, wenn auf beiden Seiten des Aufnahmebehälters zwei Längen 1 und 5 von je 0,5 m ausziehbar sind, wobei dann die Gesamtlänge der Rangierleitung einschließlich der innen verbleibenden Windungen etwa 2 m beträgt. Zur Herstellung der Spleißverbindungen werden die Enden 1 und 5 herausgezogen und nach dem Ablegen der Spleißverbindungen in den Gehäusen 3 und 4 wieder zurückgeschoben.

Selbstverständlich könnten statt Spleißverbindungen auch Steckverbindungen gewählt werden. Dann wären die Enden 1 und 5 mit Steckerelementen zu versehen.

In Figur 2 sind vier Gruppen 6, 7, 8 und 9 von Lichtwellenleitern angedeutet, die z. B. jeweils optischen Kabeln zugehören, welche in ein Verteilergehäuse geführt sind. Mittels der Gruppen 11 und 12 von je fünf übereinandergestapelten Vorratsbehältern 13, aus denen jeweils beide Enden einer Rangierleitung wie anhand der Figur 1 erläutert ausziehbar sind, können Verbindungen sämtlicher Lichtwellenleiter auf verschiedenen Wegen, von denen einige strichpunktiert angedeutet sind, hergestellt oder nachträglich geändert werden.

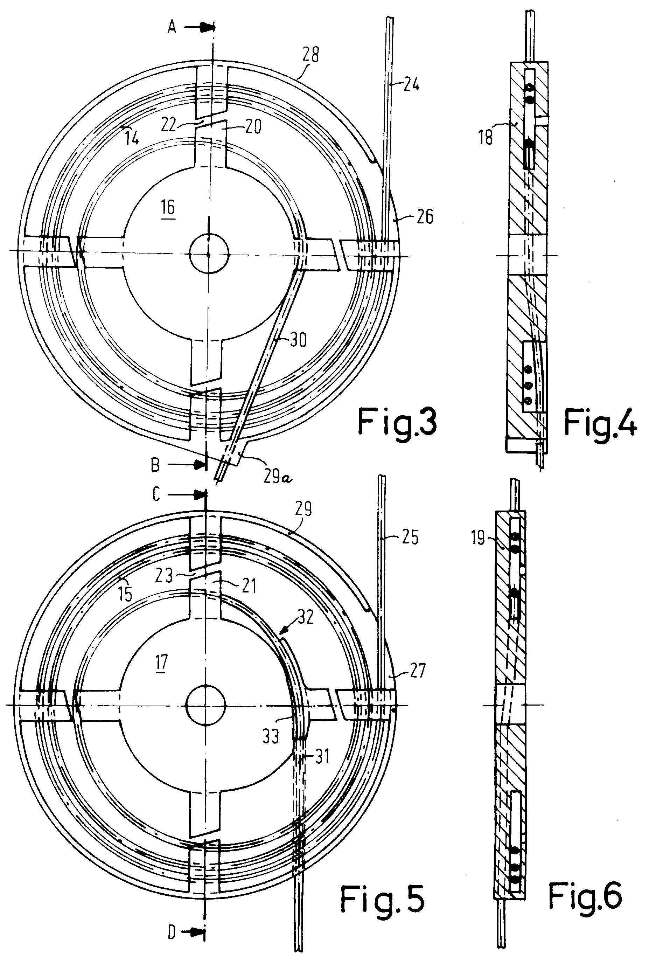

In den Figuren 3 und 4 sowie 5 und 6 sind Aufnahmebehälter dargestellt, welche speziell für das erfindungsgemäße Verfahren angepaßt sind. Dabei kommt es einerseits darauf an, daß große Längen von Rangierleitungen in möglichst wenig Platz beanspruchenden Behältern unterbringbar sind, und daß andererseits die Endabschnitte vielmals störungsfrei und leichgängig ein- und ausziehbar sind. Weiterhin darf ein für Lichtwellenleiter zulässiger minimaler Biegeradius auch für die Windungen der Rangierleitungen innerhalb der Aufnahmebehälter nicht unterschritten werden. Deshalb werden die Rangierleitungen 14 und 15 spiralig in einer Ebene in mehreren Windungen, von denen der besseren Erkennbarkeit wegen nur drei dargestellt sind, um einen Kern 16 bzw. 17 gewunden, dessen Durchmesser etwa 60 mm beträgt, so daß auch bei enger Anlage der innersten Windung am Kern der minimal zulässige Biegeradius nicht unterschritten wird.

Die Kerne 16 bzw. 17 verbinden mittig je eine rückwärtige Führungswandung 18 bzw. 19 sowie vorderer Führungswandungen, die als schmale radiale Speichen 20 bzw. 21 ausgebildet und jeweils durch schräg zur Tangente der Windungen verlaufenden Einführungsschlitze 22 bzw. 23 unterbrochen sind, durch welche die Windungen der Rangierleitungen 20 bzw. 21 einlegbar sind. Der schräge Verlauf der Schlitze 22 und 23 verhindert ein unbeabsichtigtes Wiederhinausgleiten der Windungen.

Die beidseitigen Führungswandungen schließen einen Führungsraum mit einer geringen Höhe h zwischen sich ein, welche geringfügig größer als der Durchmesser der Rangierleitung ist und etwa das 1,3 fache deren Durchmessers nicht überschreiten sollte. Dann ist eine leichtgängige, geordnete und kreuzungsfreie Führung der Windungen gewährleistet.

Die von der radial äußersten Windung ausgehenden Enden 24 bzw. 25 treten zweckmäßig durch Lücken 26 bzw. 27 der bevorzugt zylindrisch gestalteten Umfangswandungen 28 bzw. 29 aus. Die Umfangswandungen können jedoch beispielsweise auch quadratisch verlaufen, wobei dann die äußersten Windungen an vier Punkten anliegen.

Wenn das von der innersten Windung ausgehende Ende 30 der Rangierleitung 24 gemäß Figur 3 zwischen der Anlage am Kern 16 und der Führungsöse 29a frei über die äußeren Windungen geführt ist, können beim festen und vollständigen Ausziehen der Enden 24 und 30 unter gewissen Umständen Verklemmungen der ersten Windung mit der darauffolgenden eintreten, die aber leicht wieder gelöst werden können, da der Windungsraum durch die großen Lücken zwischen den radialen Speichen 20 leicht zugänglich ist.

Wenn gemäß Figur 2 mehrere der Aufnahmebehälter übereinandergestapelt werden sollen, empfiehlt sich eine Ausführungsform nach den Figuren 5 und 6. Das von der inneren Windung ausgehende Ende 31 der Rangierleitung 15 ist bis zur Stelle 32 in einen Führungskanal geführt, welcher von der Umfangswandung 29 bis zur Umfangsfläche des Kerns 17 in der Führungswandung 19 verläuft, dann innerhalb einer angepaßten Rinne 33 im Kern 17 schräg bzw. schwach S-förmig gekrümmt in die Windungsebene umgelenkt wird. Dadurch wird jegliche Reibung zwischen dem Ende 31 und den Windungen der Rangierleitung 25 im Windungsraum verhindert.

Die Rangierleitungen 24 bzw. 25 sind normalerweise so eingelegt, daß beidseitig etwa gleiche Längen ausziehbar sind. Besonders leicht können die Enden ausgezogen bzw. eingeschoben werden, wenn beide gleichzeitig bewegt werden. Falls unterschiedliche Längen der beiden Enden erforderlich sind, insbesondere dann, wenn nur ein Ende zu kurz für eine entfernter liegende Verbindungsstelle ist, kann dieses weiter herausgezogen werden, wenn gleichzeitig oder abwechselnd stückweise das andere Ende hineingeschoben wird.

Eine optimale Ausnutzung des Windungsraums im Sinne einer maximal ausziehbaren Länge der Rangierleitung ergibt sich, wenn die Windungszahl n etwa

$$n = k \ \frac{D - d}{d_o}$$

beträgt mit k = 0,25. Dabei ist d der Durchmesser des Kerns und D der Durchmesser der Umfangswandungen 28 bzw. 29 oder der maximal mögliche Durchmesser der äußersten Windung. $d_o$ ist der Durchmesser der Rangierleitung. Brauchbare Ergebnisse erhält man auch, falls $0,2 < k < 0,3$ gewählt wird.

Falls die Werte $d_o$, d und die Länge L der Rangierleitung vorgegeben sind, ist der Wert D etwa wie folgt zu wählen:

$$D = d + \sqrt{\frac{8 \ d_o \ L}{\pi}}$$

Bei dieser Dimensionierung ergeben sich kleinstmögliche Abmessungen.

## Patentansprüche

1. Verfahren zur Herstellung einer Verbindung zwischen zwei optischen Leitungen (6,7,8,9) mittels einer separaten Rangierleitung, deren Enden (1,5) mit je einem Ende der beiden optischen Leitungen (6,7,8,9) verbunden werden, wobei die einen Lichtwellenleiter enthaltende optische Rangierleitung (14,15) in einen kassettenartigen Aufnahmebehälter (2) eingelegt ist, welcher Wandbereiche (18 bis 21, 28,29), zwischen denen Speicherraum gebildet ist, einen Kern und zwei Öffnungen (26,27,29a) aufweist, durch die jeweils ein Ende der Rangierleitung (14,15) gleitfähig herausgeführt wird, wobei im Speicherraum Längenabschnitte der beiden Enden der Rangierleitung (14,15) locker eingelegt und von den Wandbereichen (18 bis 21 28,29) geführt werden, wobei Führungsmittel zur lockeren Führung eines der heraustichbaren Enden über eingelegte Windungen hinweg vorhanden sind, so daß für die Herstellung einer Verbindung mit den Enden der beiden optischen Leitungen (6,7,8,9) benötigte Bereiche der eingelegten Rangierleitung aus dem Aufnahmebehälter (2) unabhängig voneinander herausziehbar sind und vor der Herstellung der Verbindung herausgezogen werden, wobei nach Fertigstellung der Verbindung überschüssige Längenbereiche wieder hineingeschoben werden.

2. Vorratsbehälter zur Ausübung des Verfahrens nach Anspruch 1, dadurch gekennzeichnet, daß er einen mittig zwischen zwei seitlichen Führungsflächen (18, 20 bzw. 19, 21) angeordneten, im wesentlichen zylindrischen Kern mit einem Durchmesser von mindestens 40 mm aufweist, daß der Abstand h zwischen den Führungsflächen im Bereich $d_o < h < 1,3 \ d_o$ liegt, wenn $d_o$ der Durchmesser der Rangierleitung ist, daß die Rangierleitung (14, 15) mit mindestens zwei Windungen spiralig in einer Ebene um den Kern gewunden ist, daß das Ende (24, 25) der äußersten Windung durch eine Öffnung einer den Kern mit Abstand umgebenden Mantelfläche (28, 29) geführt ist, und daß das Ende (30, 31) der innersten Windung aus dem Windungsraum zwischen den seitlichen Führungsflächen (18, 20 bzw. 19, 21) schräg und über die Windungen zu einer radial außerhalb des Windungsraums angeordneten Führungsöse (29) geleitet ist.

3. Vorratsbehälter nach Anpruch 2, dadurch gekennzeichnet, daß das Ende (31) der innersten Windung auf dem Weg bis zumindest annähernd zur Anlage an die Außenfläche des Kerns (17) in einem Bereich außerhalb des Windungsraums in einen Führungskanal geführt ist.

4. Vorratsbehälter nach Anspruch 3, dadurch gekennzeichnet, daß der Führungskanal auf einem vorbestimmten Winkelbereich im wesentlichen konzentrisch zum Kern (17) und gegebenenfalls in dessen Außenbereich schräg verläuft, während der Führungskanal über die Windungen außerhalb des Windungsraums in einer parallelen Ebene vorzugsweise innerhalb einer Führungswandung geführt ist.

5. Verfahren nach Anspruch 1, unter Verwendung eines Vorratsbehälters nach einem der Anprüche 2 bis 4, dadurch gekennzeichnet, daß beide Enden (24, 30 bzw. 25, 31) der Rangierleitung gleichzeitig und gleichmäßig ausgezogen bzw. hineingeschoben werden.

6. Verfahren nach Anspruch 1 unter Verwendung eines Vorratsbehälters nach einem der Ansprüche 2 bis 4, dadurch gekennzeichnet, daß ein Ende (24 bzw. 25 oder 30 bzw. 31 der Rangierleitung herausgezogen und gleichzeitig oder abwechselnd in kurzen Längenabschnitten das andere Ende (30 bzw. 31 oder 24 bzw. 25) in den Vorratsbehälter hineingeschoben wird.

7. Vorratsbehälter nach einem der Ansprüche 2 bis 4, dadurch gekennzeichnet, daß zumindest eine der seitlichen Führungswandungen aus mindestens drei tangential beabstandeten radialen speichenförmigen Stegen (20, 21) besteht.

8. Vorratsbehälter nach Anspruch 7, dadurch gekennzeichnet, daß die Stege (20, 21) im mittleren Bereich durch schräg zur Tangente der Windungen verlaufende Einführungsschlitze (22, 23) getrennt sind.

9. Vorratsbehälter nach einem der Ansprüche 2 bis 4 oder 7 und 8, dadurch gekennzeichnet, daß die Anzahl n der Windungen

$$n = k \cdot \frac{D - d}{d_o}$$

beträgt, mit $0{,}2 < k < 0{,}3$, insbesondere $k = 0{,}25$,

$D =$ maximaler Durchmesser der äußersten Windung,

$d =$ Durchmesser des Kerns und

$d_o =$ Durchmesser der Rangierleitung.

## Claims

1. A method of establishing a connection between two optical cables (6, 7, 8, 9) by means of a separate jumper whose ends (1, 5) are each connected to a end of the two optical cables (6, 7, 8, 9), the optical jumper (14, 15) containing a optical waveguide being accommodated in a cassette-like storage container (2) comprising wall portions (18 to 21, 28, 29) which form a storage space, and comprising a core and two apertures (26, 27, 29a) through each of which a end of the jumper (14, 15) is slidably passed to the outside, sections of the two end portions of the jumper being loosely arranged in the storage space and guided by the wall portions (18 to 21, 28, 29), means for loosely guiding one of the extractable ends over accommodated turns are present, so that the sections of the accommodated jumper which are necessary for establishing a connection with the ends of the two optical cables (6, 7, 8, 9) can be withdrawn from the storage container (2) independently of each other and are pulled out before the connection is established, after completion of the connection the excess lengths being slid back into the container again.

2. A storage container for implementation of the method as claimed in Claim 1, characterized in that it comprises a substantially cylindrical core having a diameter of at least 40 mm, arranged centrally between two lateral guide walls (18, 20 and 19, 21) the distance h between the guide walls being in the range $d_o < h < 1.3\ d_o$, where $d_o$, is the diameter of the jumper, in that the jumper (14, 15) is wound spirally in at least two turns in one plane around the core, in that the end (24, 25) of the outermost turn is led through a opening in a cladding (28, 29) surrounding the core at a distance, and in that the end (30, 31) of the innermost turn is led obliquely from the winding space between the lateral guide walls (18, 20 and 19, 21) and over the turns to a guide eyelet (29) located radially outside the winding space.

3. A storage container as claimed in Claim 2, characterized in that the end (31) of the innermost turn is led, on its path to a point at least approximately in contact with the outer space of the core (17), through a guide duct in a area outside the winding space.

4. A storage container as claimed in Claim 3, characterized in that, over a predetermined angular range, the guide duct is substantially concentric with the core (17), and, possibly, runs obliquely in the outer region of the core, while the guide duct is led over the turns outside the winding space in a parallel plane preferably inside a guide wall.

5. A method as claimed in Claim 1, using a storage container as claimed in any one of the Claims 2 to 4, characterized in that both ends (24, 30 and 25, 31) of the jumper are pulled out or inserted simultaneously and evenly.

6. A method as claimed in Claim 1, using a storage container as claimed in any one of Claims 2 to 4, characterised in that one end (24, 25 or 30, 31) of the jumper is pulled out and the other end (30, 31 or 24, 25) is simultaneously or alternately pushed into the storage container in small sections.

7. A storage container as claimed in any one of Claims 2 to 4, characterized in that at least one of the lateral guide wall consists of at least three tangentially space, spoke-shaped radial beams (20, 21).

8. A storage container as claimed in Claim 7, characterized in that the beams (20, 21) are interrupted in their central area by lead-in slots (22, 23) running obliquely to the tangents of the turns.

9. A storage container as claimed in ay one of Claims 2 to 4 or 7 and 8, characterized in that the number of n of the turns is

$$ n = k \cdot \frac{D - d}{d_o} , $$

where $0.2 < k < 0.3$, in particular with $k = 0.25$,

    $D =$      the maximum diameter of the outermost turn,
    $d =$      the diameter of the core and
    $d_o =$      the diameter of the jumper.

**Revendications**

1. Procédé pour établir une connexion entre deux lignes optiques (6,7, 8, 9) au moyen d'une ligne d'aiguillage individuelle dont les extrémités (1, 5) sont reliées chacune à l'une des extrémités des deux lignes optiques (6, 7, 8, 9), la ligne d'aiguillage optique (14, 15) qui comporte un guide de lumière étant disposé dans un dispositif de stockage (2) en forme de cassette, qui présente des parois latérales (18 à 21, 28, 29) entre lesquelles est formé de l'espace de stockage, un noyau et des ouvertures (26, 27, 29a) par lesquelles est sortie souplement chaque fois une extrémité de la ligne d'aiguillage optique (14, 15), des parties des deux extrémités de la ligne d'aiguillage (14, 15) étant réintroduites de façon peu serrée et étant guidés par les parois latérales (18 à 21, 28, 29), des moyens de guidage étant disponibles pour un guidage peu serré de l'une des extrémités pouvant être sortie lorsque ladite extrémité est réintroduite au-dessus des spires enroulées, de sorte que peur l'établissement d'une connexion avec les extrémités des deux lignes optiques (6, 7, 8, 9) des longueurs nécessaires de la ligne d'aiguillage stockée peuvent être sorties les unes indépendamment des autres du dispositif de stockage (2) et qu'elles en sont sorties avant l'établissement de la connexion, après l'établissement de la connexion des longueurs excessives étant à nouveau réintroduites dans ledit dispositif.

2. Dispositif de stockage conçu pour la mise en oeuvre du procédé selon la revendication 1, caractérisé en ce qu'il présente disposé centralement entre deux parois de guidage latérales (18, 20 respectivement 19, 21) un noyau essentiellement cylindrique dont le diamètre est au moins égal à 40 mm, en ce que l'écartement h séparant les parois de guidage se situe dans la gamme $d_o < h < 1,3\ d_o$, lorsque $d_o$ est le diamètre de la ligne d'aiguillage, en ce que la ligne d'aiguillage (14, 15) est enroulée en spirale autour le noyau dans un seul plan de manière à constituer au moins deux spires, en ce que l'extrémité (24, 25) de la spire extérieure est guidée à travers une ouverture pratiquée dans la paroi latérale (28, 29) espacée du noyau et en ce que l'extrémité (30, 31) de la spire intérieure est sortie obliquement de l'espace d'enroulement en passant entre les parois de guidage latérales (18, 20 respectivement 19, 21) et au-dessus des spires pour s'étendre vers un oeillet de guidage (29) disposé radialement à l'extérieur de l'espace d'enroulement.

3. Dispositif de stockage selon la revendication 2, caractérisé en ce que l'extrémité (31) de la spire intérieure est guidée dans un canal de guidage lorsqu'elle s'étend vers un point qui touche au moins à peu près à la surface extérieure du noyau (17) dans une zone située à l'extérieur de l'espace d'enroulement.

4. Dispositif de stockage selon la revendication 3, caractérisé en ce que dans une zone angulaire prédéterminée le canal de guidage s'étend de façon essentiellement concentrique par rapport au noyau (17) et le cas échéant obliquement dans sa zone extérieure, alors que le canal de guidage s'étendant au-dessus des spires à l'extérieur de l'espace occupé par les spires est guidé dans un plan parallèle avantageusement à l'intérieur d'une paroi de guidage.

5. Procédé selon la revendication 1 utilisant un dispositif de stockage conçu selon l'une des revendications 2 à 4, caractérisé en ce que les deux extrémités (24, 30 respectivement 25, 31) de la ligne d'aiguillage peuvent être sorties respectivement réintroduites simultanément et uniformément.

6. Procédé selon la revendication 1 utilisant un dispositif de stockage conçu selon l'une des revendications 2 à 4, caractérisé en ce que l'une des deux extrémités (24 respectivement 25, ou 30 respectivement 31) de la ligne d'aiguillage est sortie du dispositif de stockage et que l'autre extrémité (30 respectivement 31, ou 24 respectivement 25) y est réintroduite simultanément ou alternativement en petites étapes.

7. Dispositif de stockage selon l'une des revendications 2 à 4, caractérisé en ce qu'au moins l'une des parois de guidage est constituée au moins de trois parties radiales (20, 21) a forme de rayon espacées tangentiellement.

8. Dispositif de stockage selon la revendication 7, caractérisé en ce que dans la zone centrale les parties (20, 21) sont séparées par des fentes d'introduction (22, 23) s'étendant obliquement à la tangente des spires.

9. Dispositif de stockage selon l'une des revendications 2 à 4 ou 7 et 8, caractérisé en ce que le nombre de spires n est égal à

$$n = k \cdot \frac{D - d}{d_o} \ ,$$

avec $0,2 < k < 0,3$, particulièrement $k = 0,25$.

D      est le diamètre maximal de la spire extérieure,

d      est le diamètre du noyau et

$d_o$    est le diamètre de la ligne d'aiguillage.

Fig.2

Fig.1

Fig.3

Fig.4

Fig.5

Fig.6